# EUROPÄISCHE PATENTANMELDUNG

(11) **EP 3 269 446 A1**
(43) Veröffentlichungstag der Anmeldung: **17.01.2018**
(21) Anmeldenummer: 17176824.5
(22) Anmeldetag: 20.06.2017
(51) Int. Cl.: B01J 20/26, B01J 20/28, B01D 15/38, A23L 5/20, A23F 5/22, A23F 5/18, B01J 43/00, B01J 47/15

(54) **VERBUNDMATERIAL, ANORDNUNG UND VERFAHREN ZUR FESTPHASENEXTRAKTION VON FLÜSSIGEN LEBENSMITTELN**

(30) Priorität: 08.07.2016 DE 102016212460
(71) Anmelder: Robert Bosch GmbH, 70442 Stuttgart (DE)
(72) Erfinder: Widenmeyer, Markus, 71101 Schoenaich (DE)

(57) **Zusammenfassung**

Die Erfindung betrifft ein Verbundmaterial (1) zur Festphasenextraktion von flüssigen Lebensmitteln. Es weist eine erste Schicht (11) auf, die ein erstes Material (111) aufweist und eine zweite Schicht (12), die ein zweites Material (121) aufweist. Das erste Material (111) weist Affinitätsrezeptoren (112) auf, die Säuregruppen (113, 114) enthalten. Das zweite Material (121) enthält basische Gruppen (122). Eine Anordnung zur Festphasenextraktion von flüssigen Lebensmitteln weist einen Einlassbereich auf, welcher der ersten Schicht (11) des Verbundmaterials zugewandt ist. Weiterhin weist die Anordnung einen Auslassbereich auf, welcher der zweiten Schicht (12) zugewandt ist. Das flüssige Lebensmittel kann durch den Einlassbereich in die Anordnung eingeführt werden und ihr durch den Auslassbereich entnommen werden.

## Beschreibung

Die vorliegende Erfindung betrifft ein Verbundmaterial zur Festphasenextraktion von flüssigen Lebensmitteln. Weiterhin betrifft sie eine Anordnung zur Festphasenextraktion von flüssigen Lebensmitteln, welche das Verbundmaterial enthält und ein Verfahren zur Festphasenextraktion von flüssigen Lebensmitteln, welches von der Anordnung Gebrauch macht.

### Stand der Technik

Molekular geprägte Polymere (Molecular Imprinted Polymers; MIP) sind eine Klasse von Materialien, die verwendet werden können, um bestimmte organische Stoffe aus komplexen in flüssiger Form vorliegenden Stoffmischungen selektiv zu extrahieren. Hierfür kann das molekular geprägte Polymer beispielsweise in einer Kartusche oder als Pellet vorgehalten werden, das dann mit der zu behandelnden Flüssigkeit durchströmt wird. Grundsätzlich fungieren molekular geprägte Polymere häufig als funktionaler Bestandteil, welcher Wasserstoffbrückenbindungen oder Säure-Base-Wechselwirkung ausnutzt, um den selektiv zu extrahierenden Stoff chemisch zu binden. Um eine selektive Bindung der zu extrahierenden Substanz zu gewährleisten, weisen molekular geprägte Polymere deshalb häufig in das Polymer eingebaute Monomereinheiten mit sauren Funktionen auf.

Flüssige Lebensmittel enthalten in der Regel ionisch gelöste Mineralien, wie beispielsweise Natriumchlorid, Natriumsulfat oder Calciumhydrogencarbonat. Laut Trinkwasserverordnung können beispielsweise bis zu 200 mg Natrium pro Liter Wasser im Trinkwasser enthalten sein. Noch mehr Mineralien enthalten Säfte. Wenn molekular geprägte Polymere zum Extrahieren derartiger flüssiger Lebensmittel verwendet werden, fungieren sie aufgrund ihrer sauren Funktion als Ionenaustauscher. Sie tauschen also beispielsweise Natriumionen in Protonen um. Dies kann zu einer starken Absenkung des pH-Wertes führen.

### Offenbarung der Erfindung

Das Verbundmaterial dient zur Festphasenextraktion von flüssigen Lebensmitteln, insbesondere von flüssigen Lebensmitteln, welche Salze enthalten. Es weist eine erste Schicht und eine zweite Schicht auf. Diese beiden Schichten können entweder unmittelbar aufeinanderfolgen oder es können noch weitere Schichten mit zusätzlichen Funktionen zwischen der ersten Schicht und der zweiten Schicht angeordnet sein. Die erste Schicht weist ein erstes Material auf, das Affinitätsrezeptoren aufweist, welche Säuregruppen enthalten. Die Affinitätsrezeptoren ermöglichen das selektive Adsorbieren vorgegebener organischer Stoffe. Die zweite Schicht weist ein zweites Material auf, welches basische Gruppen enthält. Wenn ein flüssiges Lebensmittel durch das Verbundmaterial geleitet wird, so können zunächst die Affinitätsrezeptoren des ersten Materials selektiv organische Substanzen aus dem flüssigen Lebensmittel extrahieren. Dabei werden allerdings aufgrund der Ionenaustauscher-Funktion der Säuregruppen im ersten Material in dem flüssigen Lebensmittel gelöste Alkalimetallionen oder Erdalkalimetallionen durch Protonen ausgetauscht. Dies führt zu einem Ansäuern des flüssigen Lebensmittels. Passiert das flüssige Lebensmittel anschließend die zweite Schicht, so findet eine Neutralisierung dieser Protonen durch die basischen Gruppen des zweiten Materials statt. Auf diese Weise kommt es bei der Festphasenextraktion insgesamt nur zu einer geringfügigen oder sogar zu gar keiner Absenkung des pH-Wertes des flüssigen Lebensmittels.

Grundsätzlich kann das erste Material jedes anorganische oder organische Material sein, in dem Affinitätsrezeptoren ausgebildet werden können. Um eine einfache Funktionalisierung des ersten Materials zu ermöglichen, ist es jedoch bevorzugt, dass das erste Material ein Polymer, besonders bevorzugt ein organisches Polymer ist. Ganz besonders bevorzugt handelt es sich um ein molekular geprägtes Polymer, dessen Affinitätsrezeptoren mittels molekularen Prägens (Molecular Imprinting) erhältlich sein. Hierbei wird um ein als Matrize oder Schablone wirkendes Molekül herum, welches der später zu extrahierenden Substanz entspricht, durch vernetzende Polymerisation ein Polymernetzwerk hergestellt. Das Molekül, das später selektiv absorbiert werden soll, wird hierbei von dem Polymer umschlossen. Anschließend wird das Molekül wieder aus dem vernetzten Polymer herausgewaschen. Dabei bleibt ein Hohlraum in dem nun molekular geprägten Material zurück, der als Imprint bezeichnet wird und dessen Form und Polaritätsstruktur zu dem zu extrahierenden Molekül komplementär ist.

Die Säuregruppen sind insbesondere Carbonsäuregruppen und/oder Sulfonsäuregruppen, welche sich gut für die Funktionalisierung eines organischen Polymers eignen.

Die Affinitätsrezeptoren sind in einer Ausführungsform des Verbundmaterials eingerichtet, um Koffein und/oder Komplexe des Koffeins zu adsorbieren. Wenn es sich bei dem flüssigen Lebensmittel um Tee oder Kaffee handelt, kann dieser mittels des Verbundmaterials entkoffeiniert werden. Da Koffein im Kaffee auch als π-Komplex mit einer Chlorogensäure auftreten kann, kann es zweckmäßig sein, neben den spezifischen Affinitätsrezeptoren für Koffein selbst auch spezifische Affinitätsrezeptoren für derartige Koffeinkomplexe vorzusehen. Es ist bevorzugt, dass das erste Material weitere Affinitätsrezeptoren aufweist, die eingerichtet sind, um weitere chemische Verbindungen zu adsorbieren, die ausgewählt sind aus der Gruppe bestehend aus Chlorogensäuren, Diterpenen und Furanonen. Chlorogensäuren sind verschiedene Chinasäureester der Kaffeesäure, welche mit einem Anteil von bis zu 4 Gew.-% in gerösteten Kaffeebohnen enthalten sind und unter Verdacht stehen, die Magenverträglichkeit von Kaffee deutlich herabzusetzen. Diterpene, wie beispielsweise Cafestol sind bereits in ungerösteten Kaffeebohnen vorhanden. Sie werden auch durch Rösten des Rohkaffees nicht vollständig abgebaut und können so vom Menschen über Filterkaffee aufgenommen werden. Diterpene können unter anderem durch Hemmen der Cholesterol-Hydroxylase zu einem erhöhten Cholesterinspiegel führen. Furanone, wie beispielsweise 3-Hydroxy-4,5-dimethyl-furan-2-on sind schwerflüchtige Aromastoffe des Kaffees. Durch Verflüchtigung leichter flüchtiger Aromastoffe wie Methanthiol, kann der Geschmack in den Vordergrund treten, so dass der Kaffee zu würzig und/oder bitter schmeckt. Diesem Effekt kann entgegengewirkt werden, wenn das erste Material einen Teil der im Kaffee enthaltenen Furanone adsorbiert.

In einer weiteren Ausführungsform des Verbundmaterials weist das erste Material Affinitätsrezeptoren auf, die zur Adsorption von Fruchtsäuren eingerichtet sind. Wenn es sich bei den flüssigen Lebensmitteln um Getränke, Suppen oder Soßen handelt, können auf diese Weise unerwünschte Fruchtsäuren entfernt werden.

In noch einer weiteren Ausführungsform des Verbundmaterials weist das erste Material Affinitätsrezeptoren auf, welche zur Adsorption von Pestiziden eingerichtet sind. Pestizidrückstände können in Getränken wie Obstsäften enthalten sein, die mittels des Verbundmaterials gemäß dieser Ausführungsform entgiftet werden können.

Die basischen Gruppen des zweiten Materials enthalten vorzugsweise Stickstofffunktionalitäten, welche in einfacher Weise in ein polymeres Material eingebracht werden können. Geeignete basische Gruppen sind insbesondere Amingruppen, Guanidingruppen, Aminidingruppen sowie stickstoffhaltige Heterozyklen, wie insbesondere Pyrrol, Imidazol und Pyridin.

Um den pH-Wert des flüssigen Lebensmittels genau justieren zu können, ist es bevorzugt, dass das zweite Material zusätzlich zu den basischen Gruppen weiterhin Säuregruppen enthält. Dies führt dazu, dass das zweite Material eine Pufferfunktion erhält, durch welche der pH-Wert des flüssigen Lebensmittels beim Passieren des zweiten Materials eingestellt wird.

Wenn das flüssige Lebensmittel nach dem Extraktionsvorgang ungefähr pHneutral sein soll, dann es ist bevorzugt, dass die Säurestärke der Säuregruppen des zweiten Materials sich maximal um 20 % von der Basenstärke der basischen Gruppen des zweiten Materials unterscheidet. Unter der Säurestärke wird hierbei der pK_{S}-Wert verstanden und unter der Basenstärke wird der pK_{B}-Wert verstanden.

Die Anordnung zur Festphasenextraktion von flüssigen Lebensmitteln weist das Verbundmaterial, einen Einlassbereich und einen Auslassbereich auf. Der Einlassbereich ist der ersten Schicht zugewandt und der Auslassbereich ist der zweiten Schicht zugewandt. Auf diese Weise wird sichergestellt, dass das flüssige Lebensmittel die beiden Schichten in der richtigen Reihenfolge passiert.

In dem Verfahren zur Festphasenextraktion von flüssigen Lebensmitteln wird das flüssige Lebensmittel durch den Einlassbereich in die Anordnung eingeführt und der Anordnung durch den Auslassbereich entnommen.

### Kurze Beschreibung der Zeichnungen

Ein Ausführungsbeispiel der Erfindung ist in den Zeichnungen dargestellt und wird in der nachfolgenden Beschreibung erläutert.
- Fig. 1: zeigt schematisch eine Anordnung zur Festphasenextraktion von flüssigen Lebensmitteln gemäß einem Ausführungsbeispiel der Erfindung.
- Fig. 2: zeigt schematisch ein erstes Material und ein zweites Material in einem Verbundmaterial gemäß einem Ausführungsbeispiel der Erfindung.

### Ausführungsbeispiele der Erfindung

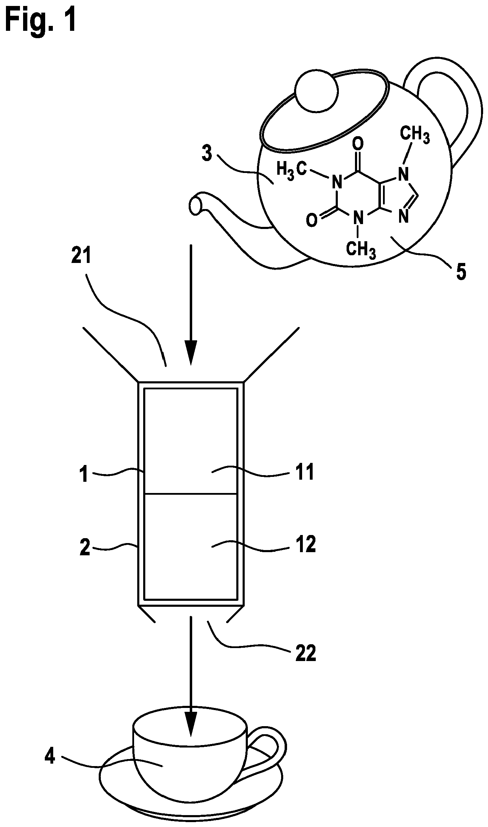

Ein Verbundmaterial 1 zur Festphasenextraktion von flüssigen Lebensmitteln gemäß einem ersten Ausführungsbeispiel der Erfindung ist als Stäbchen ausgeführt, das in einer Anordnung 2 zur Festphasenextraktion von flüssigen Lebensmitteln eingeführt ist. Die Anordnung 2 weist einen Einlassbereich 21 an ihrer Oberseite und einen Auslassbereich 22 an ihrer Unterseite auf. Das Verbundmaterial 1 ist so in der Anordnung 2 angeordnet, dass eine erste Schicht 11 des Verbundmaterials 1 dem Einlassbereich 21 zugewandt ist und eine zweite Schicht 12 des Verbundmaterials 1, welche sich unmittelbar an die erste Schicht 11 anschließt, dem Auslassbereich 22 zugewandt ist. Wenn ein flüssiges Lebensmittel aus einem Ausgangsgefäß 3 in den Einlassbereich 21 der Anordnung 2 eingeführt wird, so passiert es zunächst die erste Schicht 11 und anschließend die zweite Schicht 12. Danach verlässt es durch den Auslassbereich 22 die Anordnung 2 und kann von einem Sammelgefäß 4 aufgenommen werden. Im vorliegenden Ausführungsbeispiel handelt es sich bei dem flüssigen Lebensmittel um Kaffee. Dieser enthält Koffein 5, welches mittels des Verbundmaterials 1 extrahiert werden kann. Auch wenn in Fig. 1 nur eine einfache Ausführung des Einfüllens und Entnehmens von Kaffee in die Anordnung 2 dargestellt ist, so ist es doch auch möglich, das Einfüllen und Entnehmen in automatisierter Weise vorzunehmen. Hierzu kann die Anordnung 2 beispielsweise ein Bestandteil eines Kaffeevollautomaten sein.

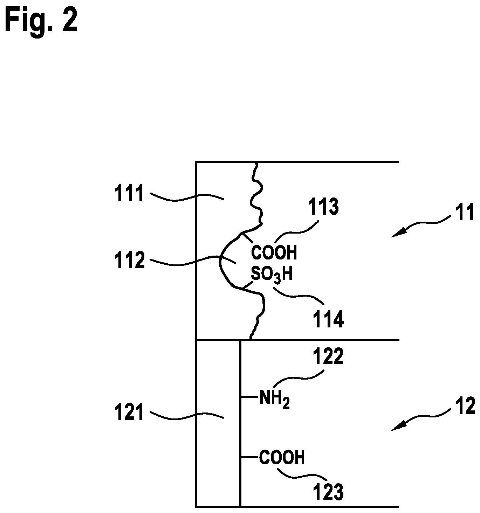

In Fig. 2 ist der Aufbau der beiden Schichten 11, 12 dargestellt. Die erste Schicht 11 enthält ein erstes Material 111, das als poröses molekular geprägtes organisches Polymer ausgeführt ist. Es weist Affinitätsrezeptoren 112 auf, die an ihrer Oberfläche mit Carbonsäuregruppen 113 und mit Sulfonsäuregruppen 114 funktionalisiert sind. Im vorliegenden Ausführungsbeispiel sind die Affinitätsrezeptoren 112 zur Adsorption des Koffeins 5 eingerichtet.

Die zweite Schicht 12 enthält ein zweites Material 121. Dieses ist an seiner Oberfläche mit basischen Gruppen 122 und mit Säuregruppen 123 funktionalisiert. Vorliegend handelt es sich bei den basischen Gruppen 122 um Amingruppen und bei den Säuregruppen 123 um Carbonsäuregruppen, wobei der pK_{B}-Wert der Amingruppen dem pK_{S}-Wert der Carbonsäuregruppen entspricht.

Wenn der Kaffee in die erste Schicht 11 eintritt, so werden seine Koffeinmoleküle 5 in den Affinitätsrezeptoren 112 des ersten Materials 111 adsorbiert. Allerdings enthält das Wasser, mit welchen der Kaffee zubereitet wurde, Alkalimetallsalze und Erdalkalimetallsalze. Die Alkalimetall-Ionen und Erdkalkalimetall-Ionen werden durch Protonen der Carbonsäuregruppen 113 und der Sulfonsäuregruppen 114 ausgetauscht, was zu einem Absenken des pH-Wertes des Kaffees führt. Wenn der auf diese Weise entkoffeinierte jedoch angesäuerte Kaffee in die zweite Schicht 12 eintritt, so wird er dort der Pufferwirkung des zweiten Materials 121 ausgesetzt. Dabei wird er auf einen pH-Wert von ungefähr 7 gepuffert. Wenn der Kaffee schließlich die Anordnung 2 durch die Auslassöffnung 22 verlässt, so ist er nicht nur von dem ursprünglich darin enthaltenen Koffein 5 befreit, sondern er weist auch einen pH-Wert auf, welcher dem pH-Wert des ursprünglich für die Kaffeezubereitung verwendeten Wassers entspricht.

In einem zweiten Ausführungsbeispiel der Erfindung weist das erste Material mehrere unterschiedliche Affinitätsrezeptoren 112 auf, die zur Adsorption von unterschiedlichen Fruchtsäuren eingerichtet sind. In diesem Ausführungsbeispiel kann die Einrichtung 2 dazu verwendet werden, um diese Fruchtsäuren aus Getränken, Suppen oder Soßen zu entfernen.

In einem dritten Ausführungsbeispiel der Erfindung weist das erste Material mehrere unterschiedliche Affinitätsrezeptoren 112 auf, die zur Adsorption von unterschiedlichen Pestiziden eingerichtet sind. In diesem Ausführungsbeispiel kann die Einrichtung 2 dazu verwendet werden, um mit Pestiziden belastete Getränke zu entgiften.

## Patentansprüche

1. Verbundmaterial (1) zur Festphasenextraktion von flüssigen Lebensmitteln aufweisend eine erste Schicht (11), die ein erstes Material (111) aufweist und eine zweite Schicht (12), die ein zweites Material (121) aufweist, wobei das erste Material (111) Affinitätsrezeptoren (112) aufweist, die Säuregruppen enthalten und wobei das zweite Material (121) basische Gruppen (122) enthält.

2. Verbundmaterial (1) nach Anspruch 1, **dadurch gekennzeichnet, dass** das erste Material (111) ein molekular geprägtes organisches Polymer ist.

3. Verbundmaterial (1) nach Anspruch 1 oder 2, **dadurch gekennzeichnet, dass** das die Säuregruppen Carbonsäuregruppen (113) und/oder Sulfonsäuregruppen (114) sind.

4. Verbundmaterial (1) nach einem der Ansprüche 1 bis 3, **dadurch gekennzeichnet, dass** die Affinitätsrezeptoren (112) zur Adsorption mindestens einer Substanz eingerichtet sind, die ausgewählt ist aus der Gruppe, bestehend aus Koffein (5), Komplexen des Koffeins, Fruchtsäuren und Pestiziden.

5. Verbundmaterial (1) nach einem der Ansprüche 1 bis 4, **dadurch gekennzeichnet, dass** die basischen Gruppen (122) Stickstofffunktionalitäten enthalten.

6. Verbundmaterial (1) nach einem der Ansprüche 1 bis 5, **dadurch gekennzeichnet, dass** das zweite Material (121) weiterhin Säuregruppen (123) enthält.

7. Verbundmaterial (1) nach Anspruch 6, **dadurch gekennzeichnet, dass** die Säurestärke der Säuregruppen (123) des zweiten Materials(121) sich maximal um 10 % von der Basenstärke der basischen Gruppen (122) des zweiten Materials (121) unterscheidet.

8. Anordnung (2) zur Festphasenextraktion von flüssigen Lebensmitteln aufweisend ein Verbundmaterial (1) nach einem der Ansprüche 1 bis 7, einen Einlassbereich (21), welcher der ersten Schicht (11) zugewandt ist, und einen Auslassbereich (22), welcher der zweiten Schicht (12) zugewandt ist.

9. Verfahren zur Festphasenextraktion von flüssigen Lebensmitteln, worin das flüssige Lebensmittel durch den Einlassbereich (21) in eine Anordnung (2) nach Anspruch 8 eingeführt wird und der Anordnung (2) durch den Auslassbereich (22) entnommen wird.
